# EUROPÄISCHE PATENTSCHRIFT

(11) **EP 3 180 548 B1**
(45) Veröffentlichungstag und Bekanntmachung des Hinweises auf die Patenterteilung: **13.05.2020**
(21) Anmeldenummer: 15747793.6
(22) Anmeldetag: 04.08.2015
(51) Int. Cl.: F16H 3/00

(54) **GESCHWINDIGKEITS-WECHSELGETRIEBE FÜR EIN KRAFTFAHRZEUG**
SPEED-CHANGE GEARBOX FOR A MOTOR VEHICLE
BOÎTE DE VITESSES D'UN VÉHICULE AUTOMOBILE

(30) Priorität: 12.08.2014 DE 102014011921
(43) Veröffentlichungstag der Anmeldung: 21.06.2017
(73) Patentinhaber: Audi AG, 85045 Ingolstadt (DE)
(72) Erfinder: HUMMEL, Steffen, 85055 Ingolstadt (DE)
(74) Vertreter: Lehle, Josef
(86) Internationale Anmeldenummer: PCT/EP2015/067924
(87) Internationale Veröffentlichungsnummer: WO 2016/023792

(56) Entgegenhaltungen:
- EP-A1- 2 669 547
- DE-A1- 3 131 156
- DE-A1-102011 089 167
- DE-T2- 68 913 356

## Beschreibung

Die vorliegende Erfindung betrifft ein Geschwindigkeits-Wechselgetriebe für ein Kraftfahrzeug gemäß dem Oberbegriff des Patentanspruchs 1.

Derartige Wechselgetriebe sind als sogenannte Doppelkupplungsgetriebe bekannt und werden häufig in Kraftfahrzeugen verwendet. Neben einem guten Wirkungsgrad haben diese Getriebe unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind zweckmäßig im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Die Aufgabe der Erfindung besteht darin, ein Geschwindigkeits-Wechselgetriebe bereitzustellen, das bei einer baulich günstigen Konstruktion größere Freiheitsgrade in der Funktionalität und in der Auslegung der Gangstufen ermöglicht.

Die Aufgabe ist durch die Merkmale des Patentanspruchs 1 gelöst. Besonders vorteilhafte Weiterbildungen und Ausgestaltungen der Erfindung sind Gegenstand der Unteransprüche.

Gemäß dem Oberbegriff des Patentanspruches 1 ist ein zusätzlicher Zwischen-Zahnradsatz zum Schalten eines Gangs, insbesondere ein zweiter Gang oder ein dritter Gang, bereitgestellt. Der zusätzliche Zwischen-Zahnradsatz ist in seiner ersten Betriebslage dem ersten Teilgetriebe zugeordnet und in seiner zweiten Betriebslage dem zweiten Teilgetriebe zugeordnet. Auf diese Weise ist der Gang des Zwischen-Zahnradsatzes entweder bei aktiviertem, erstem Teilgetriebe oder alternativ bei aktiviertem, zweitem Teilgetriebe schaltbar. Dadurch können die für eine Ganganzahl des Getriebes erforderlichen Gangebenen (Zahnradsätze) verringert werden. Zudem sind größere Freiheitsgrade in der Übersetzungssteuerung ermöglicht, etwa bei Rückschaltungen oder bei einem Überspringen von Gängen.

Die Erfindung zielt insbesondere, jedoch nicht ausschließlich, auf eine Fahrsituation ab, bei der das Fahrzeug mit eingelegtem, höherem Gang (zum Beispiel fünfter Gang) bei konstanter Fahrgeschwindigkeit betrieben wird und plötzlich beschleunigt werden soll, um etwa einen Überholvorgang einzuleiten. In diesem Fall kann vom Getriebesteuergerät eine Rückschaltung vom eingelegten fünften Gang in zum Beispiel den dritten Gang initiiert werden.

Bei einem herkömmlichen Doppelkupplungsgetriebe ist eine direkte Rückschaltung vom fünften in den dritten Gang nicht möglich, da sowohl der fünfte Gang als auch der dritte Gang demselben Teilgetriebe zugeordnet sind. Es ist daher im Stand der Technik zeitaufwendig zuerst vom fünften Gang in den vierten Gang und anschließend vom vierten Gang in den dritten Gang zurückzuschalten.

Demgegenüber kann gemäß dem Oberbegriff des Anspruchs 1 der dritte Gang durch den oben beschriebenen Zwischen-Zahnradsatz dargestellt werden, der entweder bei aktiviertem erstem Teilgetriebe oder bei aktiviertem zweitem Teilgetriebe schaltbar ist, das heißt sowohl dem ersten als auch dem zweiten Teilgetriebe zugeordnet werden kann.

In der obigen Fahrsituation wird daher der Zwischen-Zahnradsatz dem noch deaktivierten Teilgetriebe zugeordnet. Auf diese Weise ist - unter Überbrückung des vierten Gangs - eine direkte Rückschaltung vom fünften Gang in den dritten Gang ermöglicht.

In einer bevorzugten, konstruktiven Auslegung kann dazu das Festzahnrad des Zwischen-Zahnradsatzes auf der gemeinsamen Abtriebswelle angeordnet sein, während das Loszahnrad mit einem Getriebeelement (zum Beispiel den Eingangswellen) des Teilgetriebes A oder des Teilgetriebes B kuppelbar ist.

Es können zum Beispiel bei einem 11-Gang-Getriebe durch Mehrfachnutzung der Zahnradsätze nur sieben Gangebenen verwendet sein, wobei der gemeinsam genutzte Zahnradsatz mittig zwischen je drei Zahnradsätzen der beiden Teilgetriebe angeordnet ist. Der Zwischen-Zahnradsatz kann dabei einen in beiden Teilgetrieben schaltbaren Gang darstellen, bevorzugt einen 2. oder 3. Gang. Demzufolge können abhängig von den übrigen Ganganordnungen in den Teilgetrieben unter anderem vorteilhafte, häufiger anfallende Rückschaltmuster automatisiert gesteuert werden.

In einer vorteilhaften Weiterbildung der Erfindung können bei einem 7-Gang-Getriebe fünf Gangebenen verwendet sein, wobei der Zwischen-Zahnradsatz mittig zwischen jeweils zwei Gangebenen der Teilgetriebe A und B angeordnet ist und besonders vorteilhaft über Getriebeelemente in den beiden Teilgetrieben A und B einen 1., 2. und 3. Gang darstellt. Dies gelingt durch Einschaltung der Getriebeelemente in den beiden Teilgetrieben als Vorgelege, die jeweils mit dem mittigen Zahnradsatz die Übersetzungen bilden.

Dazu wird des Weiteren vorgeschlagen, dass im Teilgetriebe A zwei Eingangswellen und im Teilgetriebe B eine Eingangswelle vorgesehen sind, die antriebsseitig über drei lastschaltbare Kupplungen aktivierbar sind, wobei die zwei Eingangswellen des Teilgetriebes A auf zumindest je einen Zahnradsatz des Teilgetriebes A und die Eingangswelle des Teilgetriebes B auf die zumindest zwei Zahnradsätze des Teilgetriebes B abtreiben.

In einer besonders vorteilhaften Getriebeauslegung können die Zahnräder der Gangebenen 1, 2 und 4, 5 der Teilgetriebe A, B auf jeweils gemeinsamen Hohlwellen befestigt sein, wobei diese auf der gemeinsamen Abtriebswelle drehbar gelagert und über Schaltkupplungen mit der Abtriebswelle koppelbar sind. Dies ermöglicht eine besonders bauraumgünstige Mehrfachnutzung der Zahnradsätze zur Darstellung sowohl ins Langsame als auch ins Schnelle ausgelegter Übersetzungen.

Die Getriebeelemente der beiden Teilgetriebe können ferner in baulich einfacher Weise so ausgelegt sein, dass die den gemeinsamen Zahnradsatz zwischen den Teilgetrieben A und B in den Leistungsfluss schaltenden Gangsteller Schaltkupplungen auf der Abtriebswelle und auf zumindest einer der Eingangswellen gleichzeitig betätigen. Damit können die für die Schaltvorgänge erforderlichen Gangsteller vermindert und deren Ansteuerung vereinfacht werden.

Bei einer Getriebeauslegung mit drei realisierten Gängen über den gemeinsamen Zahnradsatz kann in vorteilhafter Weise der 2. Gang über das Teilgetriebe A und das Teilgetriebe B nutzbar sein. Damit können sowohl von Gängen des Teilgetriebes A als auch von Gängen des Teilgetriebes B lastschaltbare Rückschaltungen in den 2.Gang gesteuert werden. Besonders bevorzugt können dazu bei fünf Gangebenen und 7 Gängen im Teilgetriebe A die Gänge 7, 5 und im Teilgetriebe B die Gänge 6, 4 angeordnet sein.

Schließlich können bei einem Hybridantrieb des Kraftfahrzeugs eine Brennkraftmaschine und koaxial dazu eine Elektromaschine auf das Kupplungsgehäuse der mit den Eingangswellen verbundenen, lastschaltbaren Kupplungen abtreiben, so dass das Kraftfahrzeug über das gemeinsame Wechselgetriebe von der Brennkraftmaschine und/oder der Elektromaschine antreibbar ist. Bevorzugt kann dabei zwischen der Brennkraftmaschine und der nachgeschalteten Elektromaschine eine weitere, lastschaltbare Kupplung K0 zur Abkopplung der Brennkraftmaschine angeordnet sein.

Mehrere Ausführungsbeispiele der Erfindung sind im Folgenden anhand der beigefügten Zeichnung näher ausgeführt. Es zeigen:
- Fig. 1a: als Blockschaltbild ein Geschwindigkeits-Wechselgetriebe für Kraftfahrzeuge, mit einer Doppelkupplung und 11 schaltbaren Vorwärtsgängen;
- Fig. 1b und 1c: jeweils Ansichten entsprechend der Fig. 1a mit dem Zwischen-Zahnradsatz in einer ersten Betriebslage (Fig. 1b) und in einer zweiten Betriebslage (Fig. 1c);
- Fig. 2: eine Schaltmatrix des Wechselgetriebes nach Fig. 1;
- Fig. 3: ein weiteres Wechselgetriebe für hybridgetriebene Kraftfahrzeuge, mit drei lastschaltbaren Kupplungen und 7 Vorwärtsgängen;
- Fig. 4: eine Schaltmatrix des Wechselgetriebes nach Fig. 3;
- Fig. 5: ein zur Fig. 3 alternatives Wechselgetriebe mit einer veränderten Aufteilung der Vorwärtsgänge auf die beiden Teilgetriebe; und
- Fig. 6: eine dem Wechselgetriebe nach Fig. 5 entsprechende Schaltmatrix.

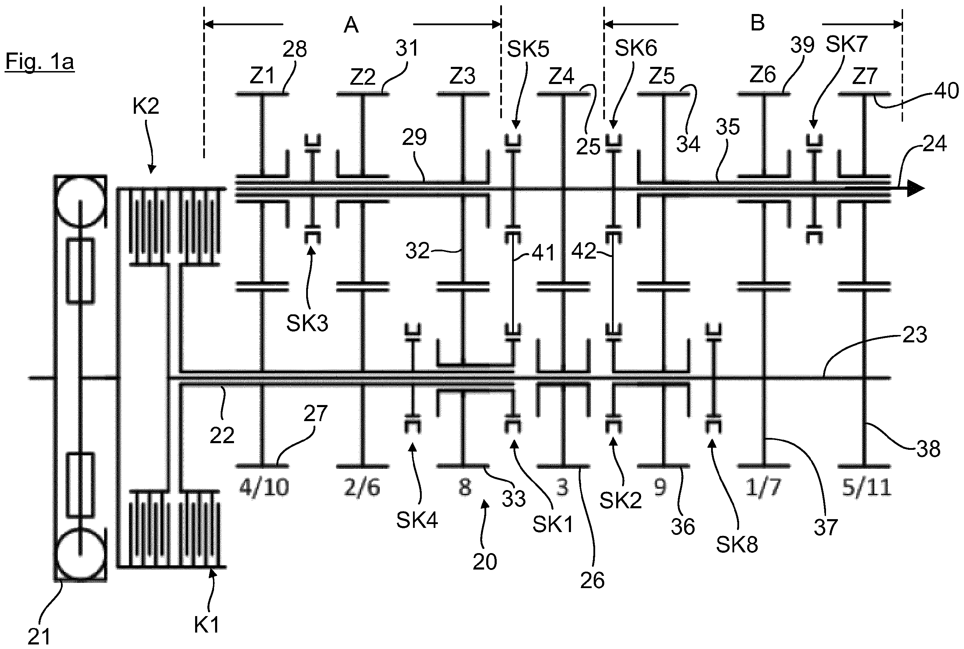

In der Fig. 1a ist ein Geschwindigkeits-Wechselgetriebe bzw. ein Doppelkupplungsgetriebe 20 für Kraftfahrzeuge dargestellt, mittels dem in sieben Gangebenen bzw. mit sieben Zahnradsätzen bis zu elf Vorwärtsgänge 1 bis 11 schaltbar sind.

Das Wechselgetriebe 20 weist zwei zum Beispiel mit einer Brennkraftmaschine (nicht dargestellt) und über einen Drehschwingungsdämpfer 21 antreibbare, und über zwei lastschaltbare Kupplungen K1, K2 alternierend aktivierbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze Z1 bis Z7 sind in an sich bekannter Weise durch Loszahnräder und Festzahnräder auf den Eingangswellen 22, 23 und auf einer gemeinsamen Abtriebswelle 24 in noch zu beschreibender Weise angeordnet, wobei die Zahnradsätze Z1 bis Z3 ein Teilgetriebe A und die Zahnradsätze Z5 bis Z7 ein Teilgetriebe B bilden.

Der Zwischen-Zahnradsatz Z4 hingegen ist mit einem Festzahnrad 25 auf der Abtriebswelle 24 und einem schaltbaren Loszahnrad 26 auf der Eingangswelle 23 zwischen den beiden Teilgetrieben A und B derart angeordnet, dass dessen Loszahnrad 26 über Schaltkupplungen SK1 und SK2 entweder mit dem Teilgetriebe A oder dem Teilgetriebe B kuppelbar ist.

Die Anordnung der übrigen Zahnradsätze ist derart, dass bei nur sieben Zahnradsätzen Z1 bis Z7 die elf Vorwärtsgänge realisierbar sind, wobei:
- das Festzahnrad 27 von Z1 auf der Eingangswelle 22 und dessen Loszahnrad 28 auf einer koaxial zur Abtriebswelle 24 gelagerten Hohlwelle 29 angeordnet ist;
- das Festzahnrad 30 von Z2 ebenfalls auf der Eingangswelle 22 und dessen Loszahnrad 31 ebenfalls auf der Hohlwelle 29 angeordnet ist;
- die beiden Loszahnräder 28, 31 mittels einer Schaltkupplung SK3 alternierend mit der Hohlwelle 29 kuppelbar sind;
- das Festzahnrad 32 von Z3 auf der Hohlwelle 29 angeordnet ist, während dessen Loszahnrad 33 über eine Schaltkupplung SK4 mit der Eingangswelle 22 oder über die Schaltkupplung SK1 mit dem Zwischen-Zahnradsatz Z4 bzw. dessen Loszahnrad 26 kuppelbar ist; über eine Schaltkupplung SK5 kann die Hohlwelle 29 mit der Abtriebswelle 24 trieblich verbunden werden;
- das Festzahnrad 34 des Zahnradsatzes Z5 ist auf einer weiteren Hohlwelle 35 befestigt, die auf der Abtriebswelle 24 drehbar gelagert ist, während das Loszahnrad 36 des Zahnradsatzes Z5 auf der Eingangswelle 23 des Teilgetriebes B gelagert und mittels der Schaltkupplung SK2 mit dem Loszahnrad 26 des Zwischen-Zahnradsatzes Z4 kuppelbar ist;
- über eine weitere Schaltkupplung SK6 kann die Hohlwelle 35 mit der Abtriebswelle 24 gekoppelt werden;
- die Festzahnräder 37, 38 der Zahnradsätze Z6 und Z7 sind auf der Eingangswelle 23 angeordnet, während deren Loszahnräder 39, 40 auf der Hohlwelle 35 gelagert und mittels der Schaltkupplung SK7 auf die Hohlwelle 35 geschaltet werden können; und
- die Schaltkupplungen SK1, SK5 und die Schaltkupplungen SK2, SK6 sind über jeweils einen Gangsteller 41, 42 (durch einen Verbindungsstrich angedeutet) gemeinsam betätigbar, um alternativ die Schaltkupplungen SK1 oder SK5 bzw. SK2 oder SK6 zu schließen.

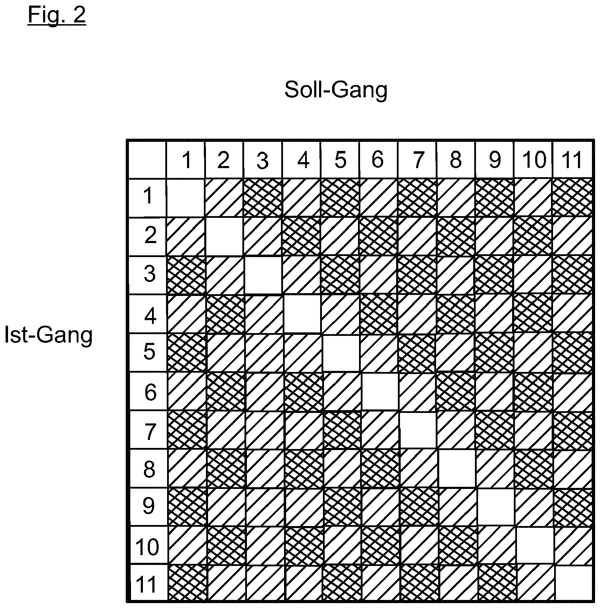

Die Vorwärtsgänge 1 bis 11 (ein gegebenenfalls erforderlicher Rückwärtsgang ist nicht eingezeichnet) können gemäß der Schaltmatrix aus der Fig. 2 geschaltet werden. In einer oberen horizontalen Zeile der Schaltmatrix sind die vorwählbaren Soll-Gänge aufgelistet, während in einer seitlichen vertikalen Spalte die Ist-Gänge aufgelistet sind. Die vertikale Spalte und die horizontale Zeile spannen ein Kennfeld mit einer Vielzahl von Kästchen auf, die sämtliche Kombinationen von Soll- und Ist-Gängen symbolisieren. Sofern ein Kästchen schräg schraffiert ist, ist die zugeordnete Gang-Kombination zugkraftunterbrechungsfrei schaltbar. Sofern ein Kästchen kreuzschraffiert ist, ist die zugeordnete Gang-Kombination nicht zugkraftunterbrechungsfrei schaltbar.

Der Zwischen-Zahnradsatz Z4 für den 3. Gang kann für beide Teilgetriebe A und B genutzt werden, wodurch zum Beispiel eine Rückschaltung aus höheren Gängen in den 3. Gang steuerbar ist, und zwar aus den höheren Gängen beider Teilgetriebe A oder B.

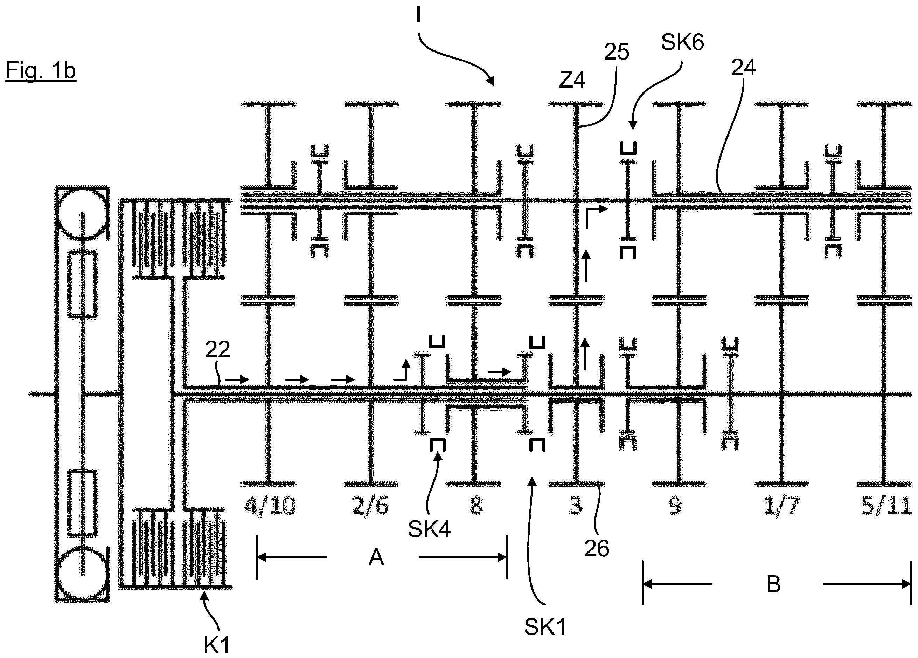

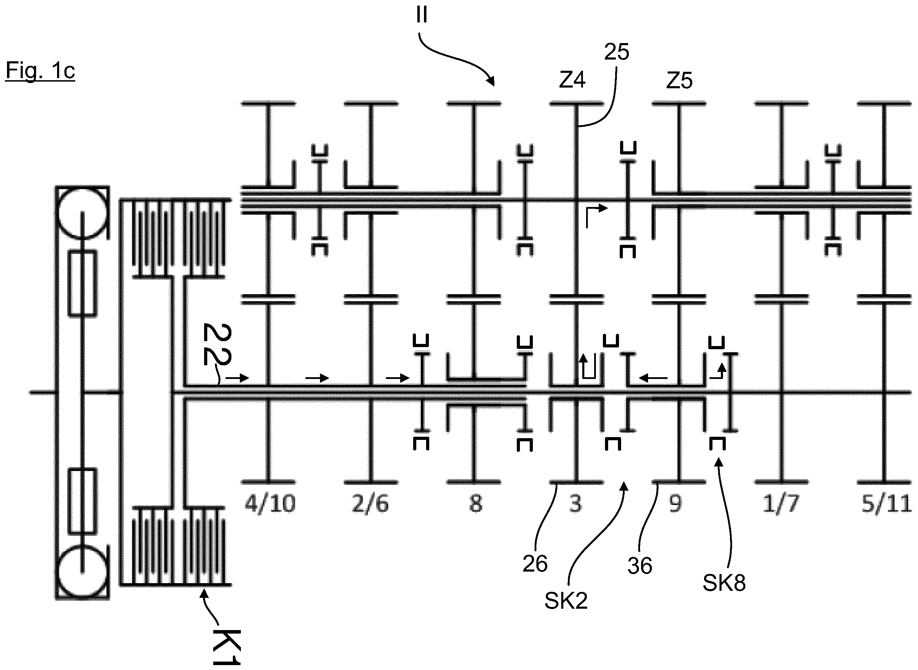

Hierzu kann der Zwischen-Zahnradsatz Z4 in einer ersten Betriebslage I (Fig. 1b) dem ersten Teilgetriebe A zugeordnet sein und in einer zweiten Betriebslage II (Fig. 1c) dem zweiten Teilgetriebe B zugeordnet sein. Dadurch ist der 3. Gang entweder bei aktiviertem ersten Teilgetriebe A (Fig. 1b) oder bei aktiviertem zweiten Teilgetriebe B (Fig. 1c) schaltbar.

In der Fig. 1b ist der Leistungsfluß durch Pfeile angedeutet: So verläuft der Leistungsfluß bei geschlossener Lastschaltkupplung K1 über die Eingangswelle 22 und den geschalteten Schaltelementen SK1 und SK4 zum Loszahnrad 26 des Zwischen-Zahnradsatzes Z4 und weiter über dessen Festzahnrad 25 auf die Abtriebswelle 24.

In der Fig. 1c verläuft der mit Pfeilen angedeutete Leistungsfluß bei geschlossener Lastschaltkupplung K2 über die Eingangswelle 23 und dem geschalteten Schaltelement SK8 zum Loszahnrad 36 des Zahnradsatzes Z5 und weiter über das geschaltete Schaltelement SK2 zum Loszahnrad 26 des Zwischen-Zahnradsatzes Z4 und weiter über dessen Festzahnrad 25 auf die Abtriebswelle 24.

So kann der 3.Gang über das Teilgetriebe A bei geschlossener Kupplung K1 und auch im Teilgetriebe B bei geschlossener Kupplung K2 und entsprechend geschalteten Schaltkupplungen SK1 bis SK8 geschaltet werden.

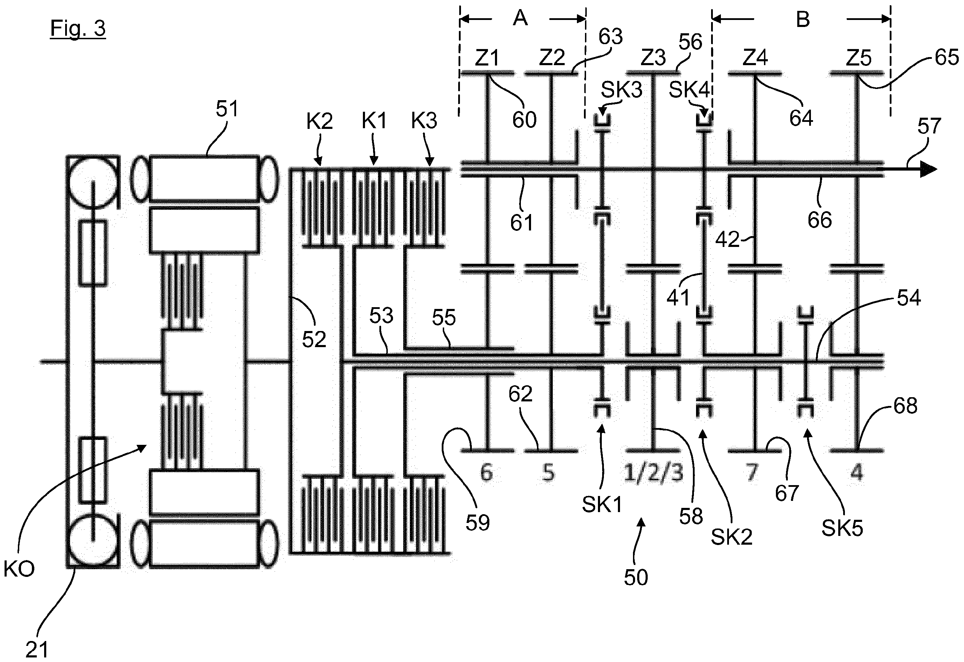

Die Fig. 3 zeigt ein Ausführungsbeispiel der Erfindung anhand eines Doppelkupplungsgetriebes 50 für ein hybridgetriebenes Kraftfahrzeug, bei dem eine Brennkraftmaschine (nicht dargestellt) über einen Drehschwingungsdämpfer 21 und eine Elektromaschine 51 auf das Gehäuse 52 von drei lastschaltbaren Kupplungen K1, K2, K3 abtreiben. Die Brennkraftmaschine kann über eine weitere, lastschaltbare Kupplung K0 von der Elektromaschine 51 abgekoppelt werden.

Die drei Kupplungen K1, K2, K3 treiben auf drei koaxiale Eingangswellen 53, 54, 55 ab, von denen die Eingangswellen 53, 55 Hohlwellen sind.

Das bis zu sieben Vorwärtsgänge 1 bis 7 aufweisende Getriebe 50 weist fünf Gangebenen bzw. Zahnradsätze Z1 bis Z5 auf, von denen die Zahnradsätze Z1 und Z2 dem Teilgetriebe A und die Zahnradsätze Z4 und Z5 dem Teilgetriebe B zugeordnet sind.

Der Zwischen-Zahnradsatz Z3 ist - in gleicher Weise wie der Zwischen-Zahnradsatz Z4 aus der Fig. 1a bis 1c - für beide Teilgetriebe A und B nutzbar und deckt die Gänge 1, 2, 3 wie nachstehend noch ausgeführt ab.

Dabei ist das Festzahnrad 56 auf der achsparallelen, gemeinsamen Abtriebswelle 57 des Getriebes 50 angeordnet, während dessen Loszahnrad 58 auf der Eingangswelle 54 des Teilgetriebes B drehbar gelagert und mittels beidseitiger Schaltkupplungen SK1, SK2 mit den angrenzenden Getriebeelementen wie folgt trieblich verbindbar ist:
- der Zahnradsatz Z1 weist zwei Festzahnräder 59, 60 auf, die auf der mit der Kupplung K3 verbundenen Eingangswelle 55 und einer auf der Abtriebswelle 57 drehbar gelagerten Hohlwelle 61 befestigt sind;
- der Zahnradsatz Z2 ist ebenfalls durch zwei Festzahnräder 62, 63 gebildet, die auf der Eingangswelle 53 der Kupplung K1 und auf der Hohlwelle 61 angeordnet sind; die Eingangswelle 53 ist zudem mit dem Loszahnrad 58 des Zahnradsatzes Z3 mittels der Schaltkupplung SK1 kuppelbar;
- die Hohlwelle 61 auf der Abtriebswelle 57 ist über eine Schaltkupplung SK 3 mit der Abtriebswelle 57 kuppelbar;
- der Zahnradsatz Z4 und der Zahnradsatz Z5 weisen Festzahnräder 64, 65 auf, die auf einer Hohlwelle 66 befestigt sind, welche auf der Abtriebswelle 57 drehbar gelagert ist; die Hohlwelle 66 ist über eine Schaltkupplung SK4 mit der Abtriebswelle 57 kuppelbar;
- die Loszahnräder 67, 68 der Zahnradsätze Z4 und Z5 sind auf der Eingangswelle 54 drehbar angeordnet und über eine weitere Schaltkupplung SK5 alternierend mit der Eingangswelle 54 trieblich verbindbar.

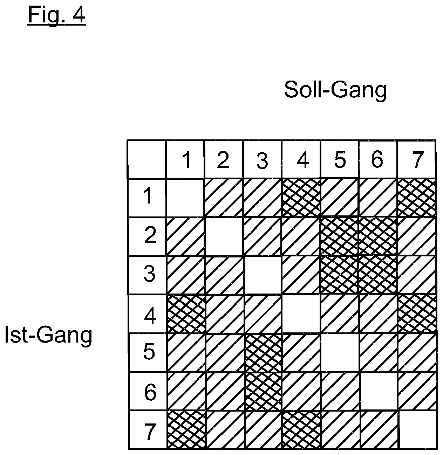

Durch Mehrfachnutzung der Zahnradsätze Z1 bis Z5 sind die Gänge 1 bis 7 realisierbar, wobei die Schaltkupplungen SK1, SK3 und die Schaltkupplungen SK2, SK4 wiederum wie vorstehend zur Fig. 1 beschrieben über gemeinsame Gangsteller 41, 42 betätigt werden. Dadurch sind für die Schaltung der Gänge nur drei Gangsteller erforderlich. Die Fig. 4 zeigt die für das Getriebe 50 nach Fig. 3 steuerbare Schaltmatrix, die analog Fig. 2 dargestellt ist.

In der Fig. 3 sind die Gänge 1, 2, 3 über den Zwischen-Zahnradsatz Z3 darstellbar. Bei der Schaltung der Gänge 1, 2, 3 ergeben sich die folgenden Leistungsfluß-Verläufe:
1. Gang: Kupplung K2, Eingangswelle 54, Schaltkupplung SK5 geschlossen zu Zahnradsatz Z5 und über die Hohlwelle 66 weiter zum Zahnradsatz Z4, über Schaltkupplung SK2 zum Zwischen-Zahnradsatz Z3 und schließlich zur Abtriebswelle 57;
2. Gang: Kupplung K1, Eingangswelle 53, über geschlossene Schaltkupplung SK1 zu Loszahnrad 58 von Zwischen-Zahnradsatz Z3, Abtrieb über Festzahnrad 56 und Abtriebswelle 57; und
3. Gang: Kupplung K3, Eingangwelle 55, Zahnradsatz Z1 auf Zahnradsatz Z2, Eingangswelle 53, Schaltkupplung SK1 auf Zahnradsatz Z3, Abtriebswelle 57.

Zudem kann in der Fig. 3 der Zwischen-Zahnradsatz Z3 zum Schalten des zweiten Gangs sowohl dem ersten Teilgetriebe A als auch alternativ dem zweiten Teilgetriebe B zugeordnet werden, so dass der zweite Gang des Zwischen-Zahnradsatzes Z3 entweder bei aktiviertem ersten Teilgetriebe A oder bei aktiviertem zweiten Teilgetriebe B schaltbar ist.

Bei einer Zuordnung des Zwischen-Zahnrads Z3 zum ersten Teilgetriebe A ergibt sich der folgende Leistungsfluß: So verläuft der Leistungsfluß bei geschlossener Lastschaltkupplung K1 über die Eingangswelle 53 und dem geschalteten Schaltelement SK1 zum Loszahnrad 58 des Zwischen-Zahnradsatzes Z3 und weiter über dessen Festzahnrad 56 auf die Abtriebswelle 57.

Bei einer Zuordnung des Zwischen-Zahnrads Z3 zum zweiten Teilgetriebe B ergibt sich ein Leistungsfluß, der bei geschlossener Lastschaltkupplung K2 über die Eingangswelle 54 und dem geschalteten Schaltelement SK5 zum Loszahnrad 67 des Zahnradsatzes Z4 und weiter über das geschaltete Schaltelement SK2 zum Loszahnrad 58 des Zwischen-Zahnradsatzes Z4 und weiter über dessen Festzahnrad 56 auf die Abtriebswelle 57 verläuft.

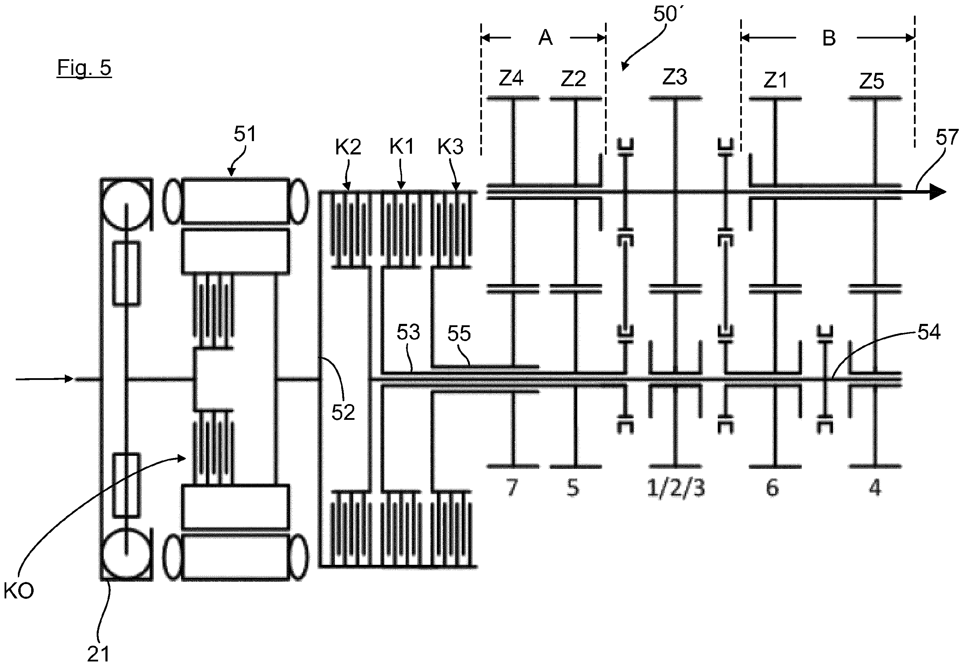

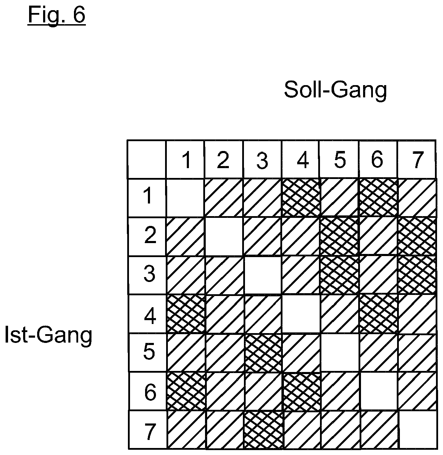

Die Fig. 5 zeigt eine zur Fig. 3 alternative Auslegung des Getriebes 50', bei der die Zahnradsätze Z1 und Z4 (6. Gang und 7.Gang) zwischen den Teilgetrieben A und B getauscht sind. Die daraus resultierende Schaltmatrix zeigt die Fig. 6.

Die Erfindung ist nicht auf die dargestellten Ausführungsbeispiele beschränkt. Insbesondere sind dem Fachmann geläufige Abwandlungen und Kombinationen innerhalb der Ausführungsbeispiele zum Beispiel in der Anzahl der vorgeschlagenen Vorwärtsgänge möglich.

Die angeführten Schaltkupplungen können durch bei Schaltgetrieben verwendete Synchronkupplungen und die lastschaltbaren Kupplungen durch hydraulisch betätigte Lamellenkupplungen gebildet sein.

## Patentansprüche

1. Geschwindigkeits-Wechselgetriebe für ein Kraftfahrzeug, mit einem ersten Teilgetriebe (A) und einem zweiten Teilgetriebe (B), deren Teilgetriebe-Eingangswellen (22, 23; 53, 54, 55) mit Lastschaltkupplungen (K1, K2, K3) verbunden sind und die auf eine gemeinsame Abtriebswelle (24; 57) abtreiben, und mit schaltbaren Zahnradsätzen, die zur Gangschaltung jeweils dem ersten Teilgetriebe (A) und dem zweiten Teilgetriebe (B) zugeordnet sind, wobei jeder der Zahnradsätze bei einer Gangschaltung mittels Schaltelementen trieblich mit der jeweiligen Teilgetriebe-Eingangswelle (22, 23; 53, 54, 55) und mit der gemeinsamen Abtriebswelle (24; 57) kuppelbar ist und bei einem Lastschaltvorgang durch Schalten einer der Lastschaltkupplungen (K1, K2, K3) eines der Teilgetriebe (A, B) aktivierbar ist, während das andere Teilgetriebe (B) deaktiviert ist, wobei ein zusätzlicher Zwischen-Zahnradsatz (Z4; Z3) zum Schalten eines Gangs, insbesondere eines zweiten Gangs oder eines dritten Gangs, bereitgestellt ist, der in einer ersten Betriebslage (I) dem ersten Teilgetriebe (A) zugeordnet ist und in einer zweiten Betriebslage (II) dem zweiten Teilgetriebe (B) zugeordnet ist, so dass der Gang des Zwischen-Zahnradsatzes (Z4; Z3) entweder bei aktiviertem ersten Teilgetriebe (A) oder bei aktiviertem zweiten Teilgetriebe (B) schaltbar ist, und wobei jeder der Zahnradsätze aus Los- und Festzahnrädern aufgebaut ist, die in einer zu den Getriebewellen senkrechten Radebene angeordnet sind und mittels Schaltelementen trieblich mit den Teilgetriebe-Eingangswellen (22, 23; 53, 54, 55) und der gemeinsamen Abtriebswelle (24; 57) kuppelbar ist, **dadurch gekennzeichnet, dass** die Zahnradsätze über Hohlwellen (29; 35; 61; 66), die auf der Abtriebswelle (24; 57) angeordnet sind, mit der Abtriebswelle (24; 57) kuppelbar sind.

2. Wechselgetriebe nach Anspruch 1, **dadurch gekennzeichnet, dass** in einem Fahrbetrieb des Kraftfahrzeugs ein im Vergleich zum Gang des Zwischen-Zahnradsatzes (Z4; Z3) höherer Gang eingelegt ist, dessen Zahnradsatz dem ersten Teilgetriebe (A) zugeordnet ist, und dass bei einer Rückschaltung von dem eingelegten höheren Gang zum Gang des Zwischen-Zahnradsatzes (Z4; Z3) der Zwischen-Zahnradsatz (Z4; Z3) in seine zweite Betriebslage (II) stellbar ist, in der der Zwischen-Zahnradsatz (Z4; Z3) dem zweiten Teilgetriebe (B) zugeordnet ist.

3. Wechselgetriebe nach Anspruch 1 oder 2, **dadurch gekennzeichnet, dass** dem ersten Teilgetriebe (A) die geraden Gänge zugeordnet sind und dem zweiten Teilgetriebe (B) die ungeraden Gänge zugeordnet sind, und/oder dass dem Zwischen-Zahnradsatz (Z4; Z3) ein gerader oder ein ungerader Gang zugeordnet ist.

4. Wechselgetriebe nach einem der vorhergehenden Ansprüche, **dadurch gekennzeichnet, dass** ein Festzahnrad (25; 56) des Zwischen-Zahnradsatzes (Z4; Z3) auf der gemeinsamen Abtriebswelle (24; 57) angeordnet ist und ein damit kämmendes Loszahnrad (26; 58) des Zwischen-Zahnradsatzes (Z4; Z3) auf einer der Teilgetriebe-Eingangswellen (23; 54) angeordnet ist und mittels Schaltelementen (SK1, SK2) mit dem ersten Teilgetriebe (A) oder dem zweiten Teilgetriebe (B) kuppelbar ist.

5. Wechselgetriebe mit 11 Gängen nach einem der vorhergehenden Ansprüche, **dadurch gekennzeichnet, dass** durch Mehrfachnutzung der Zahnradsätze (Z1 bis Z7) nur sieben Radebenen gebildet sind, wobei der gemeinsam genutzte Zahnradsatz (Z4) mittig zwischen je drei Zahnradsätzen (Z1 bis Z3, Z5 bis Z7) der beiden Teilgetriebe (A, B) angeordnet ist.

6. Wechselgetriebe mit 7 Gängen nach einem der Ansprüche 1 bis 5, **dadurch gekennzeichnet, dass** fünf Zahnradsätze (Z1 bis Z5) verwendet sind, wobei der Zwischen-Zahnradsatz (Z3) mittig zwischen jeweils zwei Zahnradsätzen (Z1, Z2, Z4, Z5) der Teilgetriebe (A und B) angeordnet ist.

7. Wechselgetriebe nach einem der vorhergehenden Ansprüche, **dadurch gekennzeichnet, dass** der Zwischen-Zahnradsatz (Z3) über Getriebeelemente, insbesondere die Zahnradsätze und/oder die Lastschaltkupplungen, in den beiden Teilgetrieben (A und B) zumindest zwei, insbesondere drei Gänge unterschiedlicher Gangstufen darstellt, und zwar besonders bevorzugt den 1. 2. und 3. Gang.

8. Wechselgetriebe nach einem der vorhergehenden Ansprüche, **dadurch gekennzeichnet, dass** im ersten Teilgetriebe (A) zwei Eingangswellen (53, 55) und im zweiten Teilgetriebe (B) eine Eingangswelle (54) vorgesehen sind, die antriebsseitig über drei lastschaltbare Kupplungen (K1, K2, K3) aktivierbar sind.

9. Wechselgetriebe nach Anspruch 8, **dadurch gekennzeichnet, dass** die zwei Eingangswellen (53, 55 des ersten Teilgetriebes (A) auf zumindest je einen Zahnradsatz (Z1, Z2) des zweiten Teilgetriebes (A) und die Eingangswelle (54) des Teilgetriebes (B) auf zumindest einen Zahnradsatz (Z4, Z5) des Teilgetriebes (B) abtreiben.

10. Wechselgetriebe nach einem der vorhergehenden Ansprüche, **dadurch gekennzeichnet, dass** die Festzahnräder (60, 63, 64, 65) der Zahnradsätze (Z1, Z2 und Z4, Z5) der Teilgetriebe (A, B) auf jeweils gemeinsamen Hohlwellen (61, 66) befestigt sind, und dass die Hohlwellen (61, 66) auf der gemeinsamen Abtriebswelle (57) drehbar gelagert sind und über Schaltelemente (SK3, SK4) mit der Abtriebswelle (57) koppelbar sind.

11. Wechselgetriebe nach einem der vorhergehenden Ansprüche, **dadurch gekennzeichnet, dass** die den Zwischen-Zahnradsatz (Z4; Z3) zwischen den Teilgetrieben (A und B) in den Leistungsfluss schaltenden Gangsteller (41, 42) Schaltkupplungen (SK1, SK5, SK2, SK6) auf der Abtriebswelle (24; 57) und auf zumindest einer der Eingangswellen (22, 23; 53, 54) gleichzeitig betätigen.

12. Wechselgetriebe nach einem der vorhergehenden Ansprüche, **dadurch gekennzeichnet, dass** das Wechselgetriebe insgesamt fünf Gangebenen (Z1 bis Z5) und insgesamt sieben schaltbare Gänge aufweist, und dass im ersten Teilgetriebe (A) der fünfte und siebte Gang und im zweiten Teilgetriebe (B) der vierte und der sechste Gang angeordnet sind.

13. Hybridantrieb für ein Kraftfahrzeug, wobei der Hybridantrieb ein Wechselgetriebe nach einem der vorhergehenden Ansprüche aufweist **dadurch gekennzeichnet, dass** eine Brennkraftmaschine und koaxial dazu eine Elektromaschine (51) auf das Kupplungsgehäuse (52) der mit den Eingangswellen (53, 54, 55) verbundenen, lastschaltbaren Kupplungen (K1, K2, K3) abtreiben.

14. Hybridgetriebe nach Anspruch 13, **dadurch gekennzeichnet, dass** zwischen der Brennkraftmaschine und der nachgeschalteten Elektromaschine (51) eine weitere, lastschaltbare Kupplung (K0) angeordnet ist.

## Claims

1. Speed-change gearbox for a motor vehicle, having a first sub-gearbox (A) and a second sub-gearbox (B), the sub-gearbox input shafts (22, 23, 53, 54, 55) of which are connected to clutches (K1, K2, K3) capable of performing shifts under load, and which terminate at a common drive output shaft (24, 57), and having shiftable gearwheel sets, which are assigned to gear shifting for the first sub-gearbox (A) and the second sub-gearbox (B) respectively, wherein each of the gearwheel sets, during gear shifting by means of shifting elements, can be operationally connected to the particular sub-gearbox input shaft (22, 23, 53, 54, 55) and to the common drive output shaft (24, 57) and, during shifting under load, by shifting one of the clutches (K1, K2, K3) capable of performing shifts under load, one of the sub-gearboxes (A, B) can be activated, while the other sub-gearbox (B) is deactivated, wherein an additional intermediate gearwheel set (Z4, Z3) is provided for shifting a gear, in particular a second gear or a third gear, which is assigned in a first operating position (I) to the first sub-gearbox (A) and in a second operating position (II) to the second sub-gearbox (B), such that the gear of the intermediate gearwheel set (Z4, Z3) can be shifted either with an activated first sub-gearbox (A) or with an activated second sub-gearbox (B), and wherein each of the gearwheel sets is composed of loose and fixed gearwheels, which are arranged in a wheel plane perpendicular to the gear shafts and can be operationally connected to the sub-gearbox input shafts (22, 23, 53, 54, 55) and the common drive output shaft (24, 57) by means of shifting elements, **characterised in that** the gearwheel sets can be connected to the output shaft (24, 57) by means of hollow shafts (29, 35, 61, 66), which are arranged on the output shaft (24, 57).

2. Gearbox according to claim 1, **characterised in that**, when the motor vehicle is in operation, a higher gear is engaged compared to the gear of the intermediate gearwheel set (Z4, Z3), the gearwheel set of which is assigned to the first sub-gearbox (A), and that, when downshifting from the higher gear engaged to the gear of the intermediate gearwheel set (Z4, Z3), the intermediate gearwheel set (Z4, Z3) is adjustable in its second operating position (II), wherein the intermediate gearwheel set (Z4, Z3) is assigned to the second sub-gearbox (B).

3. Gearbox according to claim 1 or 2, **characterised in that** the even gears are assigned to the first sub-gearbox (A) and the odd gears are assigned to the second sub-gearbox (B), and/or that an even or odd gear is assigned to the intermediate gearwheel set (Z4, Z3).

4. Gearbox according to any of the preceding claims, **characterised in that** a fixed gearwheel (25, 56) of the intermediate gearwheel set (Z4, Z3) is arranged on the common drive output shaft (24, 57) and a loose gearwheel (26; 58) of the intermediate gearwheel set (Z4, Z3) meshing with the former is arranged on one of the sub-gearbox input shafts (23, 54) and can be connected to the first sub-gearbox (A) or the second sub-gearbox (B) by means of shifting elements (SK1, SK2).

5. Gearbox with 11 gears according to any of the preceding claims, **characterised in that**, by multiple use of the gearwheel sets (Z1 to Z7) only seven wheel planes are formed, wherein the shared gearwheel set (Z4) is arranged centrally between each of three gearwheel sets (Z1 to Z3, Z5 to Z7) of the two sub-gearboxes (A, B).

6. Gearbox with 7 gears according to any of claims 1 to 5, **characterised in that** five gearwheel sets (Z1 to Z5) are used, wherein the intermediate gearwheel set (Z3) is arranged centrally between each of two gearwheel sets (Z1, Z2, Z4, Z5) of the sub-gearbox (A and B).

7. Gearbox according to any of the preceding claims, **characterised in that** the intermediate gearwheel set (Z3) represents at least two, in particular three gears with different gear steps, by means of gear elements, in particular the gearwheel sets and/or the clutches capable of performing shifts under load, in the two sub-gearboxes (A and B), and most preferably the 1^{st}, 2^{nd} and 3^{rd} gears.

8. Gearbox according to any of the preceding claims, **characterised in that**, two input shafts (53, 55) are provided in the first sub-gearbox (A) and one input shaft (54) is provided in the second sub-gearbox (B), which can be activated on the drive side by means of three clutches (K1, K2, K3) capable of performing shifts under load.

9. Gearbox according to claim 8, **characterised in that** the two input shafts (53, 55) of the first sub-gearbox (A) each terminate in at least one gearwheel set (Z1, Z2) of the second sub-gearbox (A) and the input shaft (54) of the sub-gearbox (8) terminates in at least one gearwheel set (Z4, Z5) of the sub-gearbox (B).

10. Gearbox according to any of the preceding claims, **characterised in that** the fixed gearwheels (60, 63, 64, 65) of the gearwheel sets (Z1, Z2 and Z4, Z5) of the sub-gearbox (A, B) are each attached to common hollow shafts (61, 66), and that the hollow shafts (61, 66) are rotatably mounted on the common drive output shaft (57) and can be connected by means of shifting elements (SK3, SK4) to the output shaft (57).

11. Gearbox according to any of the preceding claims, **characterised in that** the gear selector (41, 42) in the power flow shifting the intermediate gearwheel set (Z4, Z3) between the sub-gearboxes (A and B) also operates clutches (SK1, SK5, SK2, SK6) on the output shaft (24, 57) and on at least one of the input shafts (22, 23, 53, 54).

12. Gearbox according to any one of the preceding claims, **characterised in that** the gearbox has a total of five gear planes (Z1 to Z5) and a total of seven shiftable gears, and that the fifth and the seventh gear are arranged in the first sub-gearbox (A) and the fourth and the sixth gear are arranged in the second sub-gearbox (B).

13. Hybrid drive for a motor vehicle, wherein the hybrid drive has a gearbox according to one of the preceding claims, **characterised in that** an internal combustion engine and coaxially thereto an electric motor (51) terminate on the clutch housing (52) of the clutches (K1, K2, K3) capable of performing shifts under load connected to the input shafts (53, 54, 55).

14. Hybrid drive **characterised in that** a further clutch (K0) capable of performing shifts under load is arranged between the internal combustion engine and the downstream electric motor (51).

## Revendications

1. Boîte de vitesses pour un véhicule automobile, avec une première boîte de vitesses partielle (A) et une seconde boîte de vitesses partielle (B), dont les arbres d'entrée de boîte de vitesses partielle (22, 23 ; 53, 54, 55) sont reliés à des embrayages couplables sous charge (K1, K2, K3) et qui agissent en sortie sur un arbre de sortie (24 ; 57) commun, et avec des jeux d'engrenages commutables, qui, pour le passage de rapport, sont associés respectivement à la première boîte de vitesses partielle (A) et à la seconde boîte de vitesses partielle (B), dans laquelle chacun des jeux d'engrenage, lors d'un passage de rapport, peut être accouplé en entraînement à l'arbre d'entrée de boîte de vitesses partielle (22, 23 ; 53, 54, 55) respectif et à l'arbre de sortie (24 ; 57) commun au moyen d'éléments de passage de vitesses et, lors d'un processus de couplage sous charge, peut être activé par commutation d'un des embrayages couplables sous charge (K1, K2, K3) d'une des boîtes de vitesses partielles (A, B), pendant que l'autre boîte de vitesses partielle (B) est désactivée, dans laquelle un jeu d'engrenages intermédiaire (Z4 ; Z3) additionnel destiné au passage d'un rapport, en particulier d'un deuxième rapport ou d'un troisième rapport, est fourni, qui, dans une première position de fonctionnement (I), est associé à la première boîte de vitesses partielle (A) et, dans une seconde position de fonctionnement (II), est associé à la seconde boîte de vitesses partielle (B), de sorte que le rapport du jeu d'engrenages intermédiaire (Z4 ; Z3) peut être passé soit lorsque la première boîte de vitesses partielle (A) est activée soit lorsque la seconde boîte de vitesses partielle (B) est activée, et dans laquelle chacun des jeux d'engrenage est composé de pignons fous et de roues dentées fixes, qui sont disposés dans un plan de roue perpendiculaire aux arbres de boîte de vitesses, et peut être accouplé en entraînement aux arbres d'entrée de boîte de vitesses partielle (22, 23 ; 53, 54, 55) et à l'arbre de sortie (24 ; 57) commun au moyen d'éléments de passage de vitesses, **caractérisée en ce que** les jeux d'engrenages peuvent être accouplés à l'arbre de sortie (24 ; 57) par l'intermédiaire d'arbres creux (29 ; 35 ; 61 ; 66), qui sont disposés sur l'arbre de sortie (24 ; 57).

2. Boîte de vitesses selon la revendication 1, **caractérisée en ce que,** dans un mode conduite du véhicule automobile, un rapport plus élevé en comparaison du rapport du jeu d'engrenages intermédiaire (Z4 ; Z3), dont le jeu d'engrenage est associé à la première boîte de vitesses partielle (A), est engagé et que, lors d'une rétrogradation du rapport plus élevé engagé au rapport du jeu d'engrenages intermédiaire (Z4 ; Z3), le jeu d'engrenages intermédiaire (Z4 ; Z3) peut être placé dans sa seconde position de fonctionnement (II), dans laquelle le jeu d'engrenages intermédiaire (Z4 ; Z3) est associé à la seconde boîte de vitesses partielle (B).

3. Boîte de vitesses selon la revendication 1 ou 2, **caractérisée en ce que** les rapports pairs sont associés à la première boîte de vitesses partielle (A) et les rapports impairs sont associés à la seconde boîte de vitesses partielle (B), et/ou qu'un rapport pair ou un impair est associé au jeu d'engrenages intermédiaire (Z4 ; Z3).

4. Boîte de vitesses selon l'une quelconque des revendications précédentes, **caractérisée en ce qu'**une roue dentée fixe (25 ; 56) du jeu d'engrenages intermédiaire (Z4 ; Z3) est disposée sur l'arbre de sortie (24 ; 57) commun et un pignon fou (26 ; 58), s'engrenant avec celle-ci, du jeu d'engrenages intermédiaire (Z4 ; Z3) est disposé sur un des arbres d'entrée de boîte de vitesses partielle (23 ; 54) et peut être accouplé à la première boîte de vitesses partielle (A) ou la seconde boîte de vitesses partielle (B) au moyen d'éléments de passage des vitesses (SK1, SK2).

5. Boîte de vitesses avec 11 rapports selon l'une quelconque des revendications précédentes, **caractérisée en ce que** seuls sept plans de roue sont formés par l'utilisation multiple des jeux d'engrenages (Z1 à Z7), dans laquelle le jeu d'engrenages (Z4) conjointement utilisé est disposé de manière centrale entre respectivement trois jeux d'engrenages (Z1 à Z3, Z5 à Z7) des deux boîtes de vitesses partielles (A, B).

6. Boîte de vitesses avec 7 rapports selon l'une quelconque des revendications 1 à 5, **caractérisée en ce que** cinq jeux d'engrenages (Z1 à Z5) sont utilisés, dans laquelle le jeu d'engrenages intermédiaire (Z3) est disposé de manière centrale entre respectivement deux jeux d'engrenages (Z1, Z2, Z4, Z5) des boîtes de vitesses partielles (A et B).

7. Boîte de vitesses selon l'une quelconque des revendications précédentes, **caractérisée en ce que** le jeu d'engrenages intermédiaire (Z3) par l'intermédiaire d'éléments de boîte de vitesses, en particulier les jeux d'engrenage et/ou les embrayages couplables sous charge, dans les deux boîtes de vitesses partielles (A et B) représente au moins deux, en particulier trois rapports de différents étages de rapport, et ce de manière particulièrement préférée le 1^{er}, 2^{ème} et 3^{ème} rapport.

8. Boîte de vitesses selon l'une quelconque des revendications précédentes, **caractérisée en ce que** deux arbres d'entrée (53, 55) sont prévus dans la première boîte de vitesses partielle (A), et un arbre d'entrée (54) dans la seconde boîte de vitesses partielle (B), qui peuvent être activés côté entraînement par l'intermédiaire de trois embrayages couplables sous charge (K1, K2, K3).

9. Boîte de vitesses selon la revendication 8, **caractérisée en ce que** les deux arbres d'entrée (53, 55) de la première boîte de vitesses partielle (A) agissent en sortie sur au moins respectivement un jeu d'engrenages (Z1, Z2) de la seconde boîte de vitesses partielle (A), et l'arbre d'entrée (54) de la boîte de vitesses partielle (B) sur au moins un jeu d'engrenages (Z4, Z5) de la boîte de vitesses partielle (B).

10. Boîte de vitesses selon l'une quelconque des revendications précédentes, **caractérisée en ce que** les roues dentées fixes (60, 63, 64, 65) des jeux d'engrenage (Z1, Z2 et Z4, Z5) des boîtes de vitesses partielles (A, B) sont fixées sur des arbres creux (61, 66) respectivement communs, et que les arbres creux (61, 66) sont montés en rotation sur l'arbre de sortie (57) commun et peuvent être accouplés à l'arbre de sortie (27) par l'intermédiaire d'éléments de passage des vitesses (SK3, SK4).

11. Boîte de vitesses selon l'une quelconque des revendications précédentes, **caractérisée en ce que** les sélecteurs de rapport (41, 42) commutant le jeu d'engrenages intermédiaire (Z4 ; Z3) entre les boîtes de vitesses partielles (A et B) dans le flux de puissance actionnent simultanément des embrayages (SK1, SK5, SK2, SK6) sur l'arbre de sortie (24 ; 57) et sur au moins un des arbres d'entrée (22, 23 ; 53, 54).

12. Boîte de vitesses selon l'une quelconque des revendications précédentes, **caractérisée en ce que** la boîte de vitesses présente au total cinq plans de rapport (Z1 à Z5) et au total sept rapports pouvant être passés, et que le cinquième et septième rapport sont disposés dans la première boîte de vitesses partielle (A) et le quatrième et le sixième rapport dans la seconde boîte de vitesses partielle (B).

13. Motorisation hybride pour un véhicule automobile, dans laquelle la motorisation hybride présente une boîte de vitesses selon l'une quelconque des revendications précédentes, **caractérisée en ce qu'**un moteur à combustion interne, et, de manière coaxiale par rapport à celui-ci, un moteur électrique (51) agissent en sortie sur le carter d'embrayage (52) des embrayages couplables sous charge (K1, K2, K3) reliés aux arbres d'entrée (53, 54, 55).

14. Motorisation hybride selon la revendication 13, **caractérisée en ce qu'**un autre embrayage couplable sous charge (K0) est disposé entre le moteur à combustion interne et le moteur électrique (51) monté en aval.
